# EUROPEAN PATENT SPECIFICATION

(11) **EP 3 021 964 B1**
(45) Date of publication and mention of the grant of the patent: **06.09.2017**
(21) Application number: 14815094.9
(22) Date of filing: 10.07.2014
(51) Int. Cl.: B01J 29/40, C01B 39/38

(54) **PREPARATION OF ZEOLITE ZSM-5 GRANULATES FREE FROM INORGANIC BINDERS**
HERSTELLUNG VON ZEOLITH-ZSM-5-GRANULATEN OHNE ANORGANISCHE BINDEMITTEL
PRÉPARATION DE GRANULÉS D'UNE ZÉOLITE ZSM-5 EXEMPTS DE LIANTS INORGANIQUES

(30) Priority: 19.07.2013 SI 201300196
(43) Date of publication of application: 25.05.2016
(73) Proprietor: Kemijski Institut, 1000 Ljubljana (SI); Silkem d.o.o., 2325 Kidricevo (SI)
(72) Inventor: FAKIN, Thomaz, 2322 Majsperk (SI); RISTIC, Alenka, 4207 Cerklje na Gorenjskem (SI); KAUCIC, Venceslav, 4294 Krize (SI); ZABUKOVEC LOGAR, Natasa, 1000 Ljubljana (SI); GOZNIK, Ivan, 2250 Ptuj (SI); HORVAT, Andrej, 2272 Gorisnica (SI)
(74) Representative: Grünecker Patent- und Rechtsanwälte PartG mbB
(86) International application number: PCT/SI2014/000042
(87) International publication number: WO 2015/009248

(56) References cited:
- EP-A2- 0 156 595
- WO-A1-01/38224

## Description

### Field of the invention

The present invention relates to a process for the preparation of zeolite ZSM-5 granulates without the use of an inert inorganic binder. The process describes the preparation of the powdered amorphous sodium aluminosilicate gel using less than 5% of zeolite ZSM-5 seed crystals, the formation of an amorphous sodium aluminosilicate granulates without the use of the inorganic binder and finally, the final hydrothermal crystallization of crystalline ZSM-5 granulates from amorphous sodium aluminosilicate granulates at 180°C.

The present invention is related to the field of chemical technology, specifically inorganic chemical technology. This invention provides a process, which comprise the hydrothermal crystallization of ZSM-5 zeolite granulates free from the inert inorganic binder from amorphous sodium aluminosilicate granulates prepared from powdered amorphous sodium aluminosilicate without using an organic structure directing agent. Highly crystalline ZSM-5 zeolite granulates free from the inorganic binder were prepared by the presented process, which is carried out via an intermediate amorphous sodium aluminosilicate granules containing all the necessary components in desired molar ratios.

### Background of the invention

Zeolites are crystalline sodium aluminosilicate materials with a three-dimensional microporous structure, containing channels and/or cavity from 0.3 to 1.2 nm dimensions. They can be used as catalysts, adsorbents and ion exchangers owing to their unique properties, such as crystallinity, thermal stability, high specific surface areas, ordered microporous structure, the presence of catalytically active acid sites, ion-exchange properties and the ability of the selective separation depending on the size of molecules. Powdered zeolites are synthesized by hydrothermal crystallization from amorphous gels, which comprise the building components of frameworks, mineralizator that directs the process of dissolution and condensation during crystallization, and organic structure directing agent (often an organic amine or ammonium salts), which directs the formation of a specific zeolite structure type. Zeolite ZSM-5 is a representative of the zeolites with high silicon content. It is the most commonly used solid acid catalyst, as it catalyzes more than 50 different reactions, for example, cracking, isomerization, aromatization and alkylation processes. It is also used as a molecular sieve for the separation of molecules according to their size and as an adsorbent of volatile organic compounds (VOC's). Crystalline zeolite ZSM-5 is typically prepared by hydrothermal crystallization of the amorphous sodium aluminosilicate gel containing reactive sources of silicon, aluminum, sodium and the cations of organic structure directing agents or templates such as tetrapropylammonium salts. Using these components allows the crystallization of relatively pure and highly crystalline powdered zeolite ZSM-5 with some economic and ecological disadvantages. Organic structure directing agents are relatively expensive and toxic organic compounds. In addition, after the crystallization of zeolites the organic structure directing agents are captured in the channels and they block the pores. It is necessary to remove them from the interior of the crystals to prepare porous material for further use. Organic structure directing agent is usually removed by heating (e.g. calcination) of the zeolite at high temperatures above 500°C, which adds additional expense to the process for preparing this material. Therefore, synthetic procedures for the preparation of powdered zeolite ZSM-5 without organic structure directing agents have been recently developed.

The compacting of powdered zeolites into extrudates or granulates is necessary in order to facilitate the application of zeolites in catalytic, adsorption and separation processes, as it is described below. Extrudates or granulates may be prepared by inert inorganic binders or binder-free. Up to now the preparation of granulated ZSM-5 in the presence of organic structure directing agents are known in the literature. Thus Scheffler with colleagues prepared ZSM-5 grains by a transformation of macroporous granules of glass (Na₂O - B₂O₃ - SiO₂), sodium aluminate or sulfate and organic structure directing agents, such as tetrapropylammonium bromide and dipropylamine. Hydrothermal synthesis was carried out in 50 ml rotating autoclave from 24 to 90 hours at a temperature of 175°C. (F. Scheffler, W. Schwieger , D. Freude , H. Liu , W. Heyer , F. Janowski: Transformation of porous glass beads into MFI-type containing beads, Microporous and mesoporous materials 55, 2002, 181-191). As-prepared products had to be calcined at 500°C to remove the organic structure directing agent. Rauscher and colleagues also used porous granules of glass, aluminum sulfate, sodium hydroxide and monopropylamine for the preparation of ZSM-5 granules without binder, which were generated by hydrothermal transformation at 175°C from 55 to 72 hours (M. Rauscher, T. Selvam, W. Schwieger, D. Freude: Hydrothermal transformation of porous glass granules into ZSM- 5 granules, Microporous and mesoporous materials, 75, 2004, 195-202). You Ming-Boe and colleagues investigated the preparation of zeolite ZSM-5 granules without a binder with the conversion of dry silica gel, boehmite, ZSM-5 seed crystals gel and the organic structure directing agent - tetrapropylammonium hydroxide (Y. Ming-Boe, N. Yang, Y.M. Wang: Synthesis of shaped ZSM-5 zeolites by dry-gel conversion with seed gel, Acta Phys. - Chim . Sin. 2012, 28, 2115-2121). U.S. Patent U.S. 6,261,534 describes the preparation of amorphous extrudates by the reaction of hydrated SiO₂ gel, aluminum hydroxide and sodium hydroxide and the ZSM-5 seed crystals without organic structure directing agent. Crystallization of crystalline extrudates of zeolite ZSM-5 was carried out without any additional liquid phase at a temperature of 140°C for 48 hours (S. J. Miller, U.S. Patent 6,261,534, 2001: Method for making ZSM-5 zeolites). The extrudates were washed with dilute acids or bases, and calcined at 580°C to remove unreacted amorphous material. 60-65% crystalline extrudates of zeolite ZSM-5 were obtained. U.S. Patent U.S. 2009/0216056 (J.W. Beeckman, T.E. Datz, G.R. Sweet, J. Wu, U.S. Patent 2009/0216056, 2009: Production of shaped silica bodies) describes the preparation of extrudates from a mixture containing amorphous SiO₂, ZSM-5, KOH and water. Extruded material was dried and finally calcined between 300°C and 800°C.

WO 01/38224 A1 discloses a method for preparing a crystalline zeolite having specific X-ray diffraction lines, said method comprising:
(a) preparing a template-free reaction mixture comprising at least one active source of a first oxide selected from the group consisting of an oxide of silicon, germanium or both, optionally at least one active source of a second oxide selected from the group consisting of an oxide of aluminum, boron, gallium, iron or a mixture thereof, and sufficient water to shape said mixture; and
(b) heating said reaction mixture at crystallization conditions and in the absence of an added external liquid phase for sufficient time to form a crystallized material containing zeolite crystals having the X-ray diffraction lines of Table 1, wherein said zeolite crystals have a first oxide/second oxide molar ratio greater than 12.

EP 0156595 A2 relates to a process for preparing discrete particles containing a crystalline zeolite having a silica to alumina mole ratio greater than 12, and a Constraint Index of 1 to 12 by reacting together under hydrothermal conditions a mixture comprising water and sources of silica, alumina and alkali cations, which comprises:
(a) mixing together seeds of a zeolite having a silica to alumina mole ratio greater than 12, and a Constraint Index of 1 to 12, a source of silica, a source of alumina and water in forming the mixture into discrete particles;
(b) thermally treating the discrete particles to form hard, dry, attrition resistant particles;
(c) mixing the attrition resistant particles with a source of alkali cations to form an aqueous reaction mixture having a composition effective to form the zeolite of the seeds;
(d) maintaining the aqueous reaction mixture under hydrothermal conditions to form the zeolite in the discrete particles; and
(e) recovering discrete particles having the zeolite form therein.

### Technical problem

Powdered zeolites are unsuitable for many industrial processes because they do not comply with process requirements, in terms of mechanical stability, mass transport, recoverability and economics. In addition, the powdered material limits the separation of powder and gas or liquid phase, the permeability of the material and handling in general. Therefore, most industrial processes require the use of compact forms of zeolites, which means that it is necessary to compact the powdered zeolites into millimeter-sized granules or extrudated pellets. This is an integral part of catalyst and adsorbent manufacture.

The process for the preparation of compact forms of zeolite comprises mixing of the zeolite powder, a wetting agent and an inorganic binder, the formation of compact forms of zeolites, drying and calcining compact forms of zeolites. In this process, the zeolite powder is added to an inert inorganic binder to improve the mechanical strength of the granules, typically in a weight ratio between 10% and 30%, and which connect the zeolite particles into a granule. Inorganic binders are based on clays (bentonite, kaolin, montmorillonite, attapulgite, ...), silica and alumina materials and they represent a non-active, non-porous component in the compact forms of zeolites. The reduction of the active ingredient ratio for 10% to 30% results in lower yields of zeolite granulates in separation, adsorption and catalytic processes.

### Description of the solution of the problem

According to the invention the problem is solved by a process for the preparation of a compact forms - granulates of zeolite ZSM-5 free from the inorganic binder, wherein the proportion of ZSM-5 seed crystals in the amorphous sodium aluminosilicate granules does not exceed 5%. More specifically, the present invention provides a process for the preparation of zeolite ZSM-5 granules free from inorganic binders, which comprises:
a) the preparation of dried powdered amorphous sodium aluminosilicate gel without the use of organic structure directing agent.
b) the preparation of amorphous sodium aluminosilicate granulates from the dried powdered amorphous sodium aluminosilicate gel free from inorganic binder and
c) the hydrothermal crystallization of crystalline ZSM-5 granules from amorphous sodium aluminosilicate granules, wherein the inorganic reactants are non-toxic,
wherein the amorphous sodium aluminosilicate gel is prepared by the simultaneous dosing of solution of sodium water-glass and solution of sodium aluminate, wherein the pH of the gel is adjusted using dilute sulfuric (VI) acid, zeolite ZSM-5 seed crystals with a ratio between 0.5% and 5% to the total weight of the gel are added during the mixing of the components in the reactor, the aging of the gel is performed for 1 to 24 hours at a temperature from 20°C to 80°C, the gel filtration is carried out at a temperature in the range from 15°C to 95°C_{.} the gel drying is carried out from 0.5 to 24 hours at a temperature from 60°C to 120°C.

The crystalline ZSM-5 granulate is obtained by hydrothermal crystallization of amorphous sodium aluminosilicate granulate, which is prepared from dried powdered sodium aluminosilicate gel free from the organic structure directing agent. The process of the preparation of the complete granulated product can be divided into three steps: the process of the preparation of dried powdered amorphous sodium aluminosilicate gel without the use of organic structure directing agent, the process of the preparation of amorphous sodium aluminosilicate granulates free from inorganic binder and the hydrothermal crystallization of crystalline ZSM-5 granulates from amorphous sodium aluminosilicate granulates.

The advantages of this invention regarding the other described methods are the preparation of granulated zeolite ZSM-5 free from the inert inorganic binder and the hydrothermal crystallization of crystalline ZSM-5 granulates from amorphous sodium aluminosilicate granulates without the use of organic structure directing agent. The most cost-effective reagents are used, such as sodium water-glass as a source of silicon and sodium aluminate as the source of aluminum for the preparation of the amorphous sodium aluminosilicate gel. Thus the process of the preparation of ZSM-5 zeolite granulates was combined with the synthesis of ZSM-5 without the use of organic structure directing agent.

A short time, e.g. 22 to 28 hours at a temperature of about 180°C, which is required for the transformation of the amorphous sodium aluminosilicate granules into the crystalline zeolite ZSM-5 granules, is another important factor of the present invention according to the state of the art.

Highly crystalline ZSM-5 zeolite granulates free from the inorganic binder are prepared with the presented process, which is carried out via the intermediate amorphous sodium aluminosilicate granules containing all the necessary components in desired molar ratios.

### Brief description of the figures

The invention is represented by the following figures:

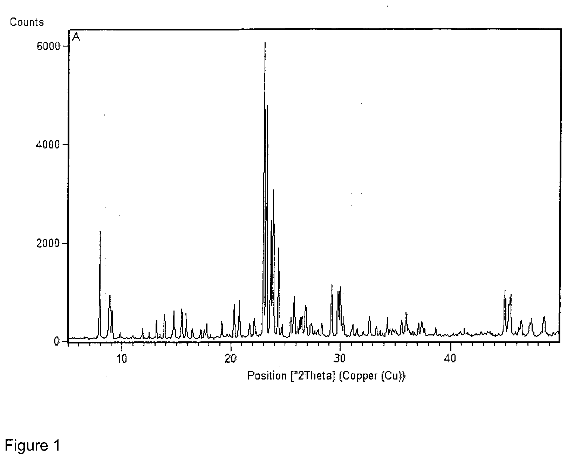

Figure 1: The XRD diffractogram of the product A of the Example 1, which corresponds to the reference XRD pattern of zeolite ZSM-5 with a reference with PDF card 01-079-1638.

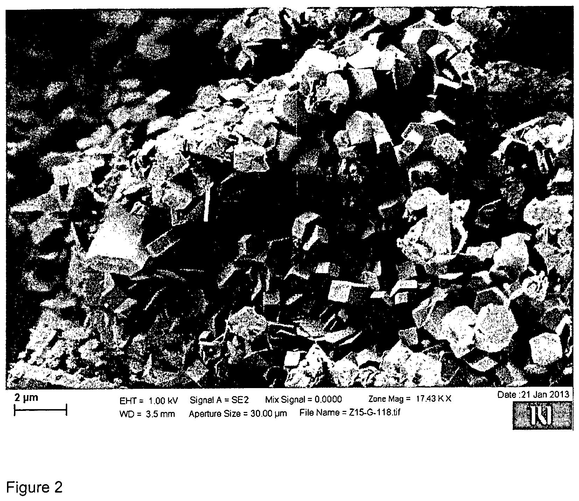

Figure 2: SEM image of the product A, where crystals of zeolite ZSM-5 with typical morphology are clearly visible. The crystals are grown up together into a larger compact agglomerates without any other phase, which would connect individual crystals and would behave as a binder.

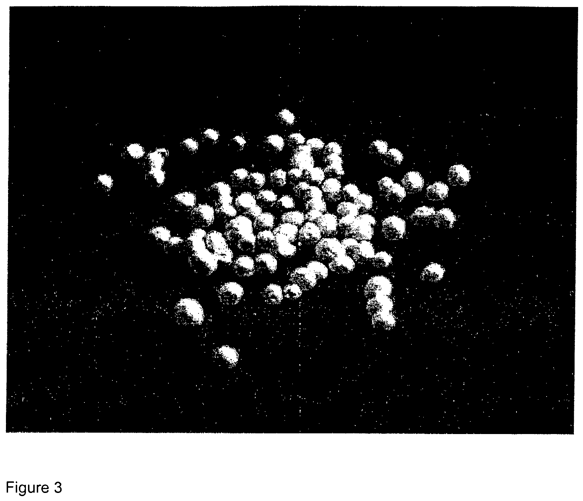

Figure 3: SEM image of zeolite ZSM-5 granulates free from the inorganic binder

### Detailed Description of the Invention

The main novelty of the proposed process is the filtration of the amorphous sodium aluminosilicate gel and the formation of granules with the subsequent preparation of zeolite ZSM-5 granules free from inert inorganic binder by hydrothermal crystallization. Amorphous sodium aluminosilicate granules were prepared from powdered sodium aluminosilicate gel without the use of organic structure directing agent. The process of the preparation of the end product, i.e. granulated ZSM-5 is divided into three steps, namely:
1. the process of the preparation of dried powdered amorphous sodium aluminosilicate gel without the use of organic structure directing agent,
2. the process of the preparation of amorphous sodium aluminosilicate granulates free from inorganic binder, and
3. the hydrothermal crystallization of crystalline ZSM-5 granulates from amorphous sodium aluminosilicate granulates.

The preparation of the amorphous sodium aluminosilicate gel is obtained by simultaneous dozing of a solution of sodium water-glass and a solution of sodium aluminate and with constant stirring of the reaction components in the reactor. The reaction components are inexpensive, non-toxic inorganic reactants: sodium water-glass, sodium aluminate, sulfuric (VI) acid, distilled water, sodium hydroxide solution, and zeolite ZSM-5 seed crystals. Sodium water-glass with a molar ratio SiO₂/Na₂O between 1.8 and 3.5 is used as a source of silicon component. Solution of sodium aluminate with a molar ratio of Al₂O₃/Na₂O between 1.6 and 2.0 is used as a source of aluminum component. The pH of the gel is controlled by the addition of diluted sulfuric (VI) acid in the solution of water-glass, or in the solution of sodium aluminate or sodium aluminosilicate gel. Zeolite ZSM-5 seed crystals with a weight ratio between 0.5% and 5% to sodium aluminosilicate gel are added in the system during the mixing of components. ZSM-5 seed crystals can be added to a solution of sodium water-glass or sodium aluminate prior to the preparation of the amorphous sodium aluminosilicate gel. The aging of thus prepared gel is carried out for 1 to 24 hours at a temperature from 20°C to 80°C. After the aging the gel is filtered at a temperature in the range from 15°C to 95°C. Drying of the gel is performed from 0.5 to 24 hours at a temperature from 60 to 120°C.

Amorphous sodium aluminosilicate powder is prepared by grinding of dry filter cake and sieving of particles, in order to remove particles that are larger than 0.5 mm. The powder material is then mixed in an intensive mixer together with simultaneously adding of a wetting agent and a solution of sodium water-glass. When the amorphous sodium aluminosilicate powder is sufficiently wetted, the mixture is moved on a disk granulator and compact granules are prepared. The amorphous sodium aluminosilicate gel is granulated with the solution of sodium water-glass. The wetted granules are dried from 0.5 to 24 hours at a temperature from 60°C to 120°C. To achieve better strength of the end product, i.e. granules, dried granules are calcined in the calcining furnace for three hours at a temperature of 550°C. The dry compact sodium aluminosilicate is then sieved to the desired size fraction, i.e. between 1.4 mm to 5.0 mm. Thus obtained granulates are re-immersed in the solution of sodium hydroxide or sodium aluminate. Hydrothermal crystallization of amorphous sodium aluminosilicate granules with sizes between 1.4 mm to 5.0 mm is carried out in a solution of sodium hydroxide or sodium aluminate in a closed autoclave, wherein crystalline ZSM-5 granules are formed from 22 to 28 hours at temperature in the range from 170°C to 190°C. At the crystallization of the crystalline product from amorphous sodium aluminosilicate granules no organic structure directing agent is used. The crystallization is carried out in the alkaline solution at pH values between 9 and 11, where the weight ratio of granulate : alkaline solution is 1:10. After the crystallization is terminated, the end products are filtered and rinsed with distilled water, followed by drying of crystalline zeolite ZSM-5 granulates.

The invention will be further illustrated with examples

### Example 1

(1) 1411 g of 65% solution of sodium water-glass (8.2% Na₂O, 25.7% SiO₂) was prepared. 20 g of seed crystals of powdered crystalline ZSM-5 was added to the solution.
(2) 200 g of 50% solution of sodium aluminate (173.91 g/L Na₂O, 161.62 g/L Al₂O₃) was prepared.
(3) 408 g of 25.4% H₂SO₄ solution (H₂SO₄, 96 %) was prepared.
(4)1550 g of 68 % solution of sodium water-glass (8.2% Na₂O, 25.7% SiO₂) was prepared for granulation.

### 1. A preparation of the amorphous sodium aluminosilicate gel

Reaction gel was prepared in a steel reactor equipped with an intensive stirrer (mixer) and a heater. The reactor was first filled with 100 g of distilled water. The solution of sodium water-glass (1) and the solution of sodium aluminate (2) in a volume ratio of 4.7:1 were added during stirring. The temperature of the reactor was kept constant at 60°C. Dosing of both two components was performed for 30 minutes. After the end of the dosing of the two components, a diluted solution of H₂SO₄ (3) was added to the mixture. Dosing was completed after 30 minutes. The reaction mixture was aged for 2 hours at a temperature of 60°C. Filtration was followed using a suction filter. Filtering cake was then dried for 16 hours in a laboratory oven at 110°C.

### 2. A granulation of the amorphous sodium aluminosilicate gel

Solution of sodium water-glass (4) was added during stirring of 1200 g of the dried cake in the intensive mixer. After the mixing, the mixture was granulated on the disk granulator. Granulate was then dried in laboratory oven for 16 hours at a temperature of 110°C. Then sieving of the granules to the desired size of between 1.40 mm and 2.36 mm was performed. The granules were then calcined in the laboratory calcining furnace for 2 hours at a temperature of 500°C.

### 3. A hydrothermal crystallization of crystalline zeolite ZSM- 5 granulate

The cooled granules were put in the reactor and a solution of NaOH with pH 10 was added in the weight ratio of granulate : NaOH solution was 1:10. Closed autoclave was then heated in a laboratory oven for 24 hours at a temperature of 180°C. The cooled granules were then separated from the solution, washed with 3 times of the volume of distilled water and dried for 16 hours in a laboratory oven at a temperature of 110°C.

The resulting product was crystalline zeolite ZSM- 5 granulate denote as A.

### Example 2

The procedure of Example 1 was repeated, except that granules with the size in the range 2.36 mm to 3.35 mm was used for the crystallization of crystalline ZSM-5 granulates from amorphous sodium aluminosilicate granulates. The product was crystalline ZSM-5 granulate denoted as B.

### Example 3

The procedure of Example 1 was repeated, except that granules with the size in the range 3.35mm to 5 mm was used for the crystallization of crystalline ZSM-5 granulates from amorphous sodium aluminosilicate granulates. The product was crystalline ZSM-5 granulate denoted as C.

### Example 4

The procedure of Example 2 was repeated, but using a solution of NaOH with a pH 9 for the crystallization of crystalline ZSM-5 granulates from amorphous sodium aluminosilicate granulates. The product was a crystalline ZSM-5 granulate denoted as D.

### Example 5

The procedure of Example 2 was repeated, but using a solution of NaOH with a pH 11 for the crystallization of crystalline ZSM-5 granulates from amorphous sodium aluminosilicate granulates. The product was a crystalline ZSM-5 granulate labeled as E.

### Example 6

The procedure of Example 2 was repeated, but using the filtrate or a mother liquor solution of pH 10 for the crystallization of crystalline ZSM-5 granulates from amorphous sodium aluminosilicate granulates. The product was a crystalline ZSM-5 granulate marked as F.

### Example 7

The procedure of Example 2 was repeated, but using a dilute solution of sodium aluminate with the pH of 10 for the crystallization of crystalline ZSM-5 granulates from amorphous sodium aluminosilicate granulates. The product was a crystalline ZSM-5 granulate marked as G.

### Example 8

The procedure of Example 2 was repeated, but using a dilute solution of sodium aluminate with the pH of 11 for the crystallization of crystalline ZSM-5 granulates from amorphous sodium aluminosilicate granulates. The product was a crystalline ZSM-5 granulate marked as H.

### Example 9

Similar to example 8, except that the ratio of the amorphous sodium aluminosilicate granulate to solution of sodium aluminate at the pH value of 11 is equal to 1 for the crystallization of crystalline ZSM-5 granulates from amorphous sodium aluminosilicate granulates. The product was a crystalline ZSM-5 granulate marked as I.

### Example 10

The procedure of Example 2 was repeated, except that the time of crystallization of crystalline ZSM-5 granulates from amorphous sodium aluminosilicate granulates at a temperature of 180°C was 28 hours. The product is a crystalline granulate denoted as J.

### Example 11

The procedure of Example 1 was repeated, except that amorphous sodium aluminosilicate granules were not calcined prior to the crystallization of crystalline ZSM-5 granulates from amorphous sodium aluminosilicate granulates. The product was a crystalline ZSM-5 granulate denoted as K.

### Example 12

The procedure of Example 1 was repeated, except that the crystallization from the amorphous sodium aluminosilicate gel was carried out after the aging at a temperature of 180°C for 24 hours and it served as a comparison between the powdered and granulated zeolite ZSM-5 prepared by the process without the use of the organic structure directing agent. The product was crystalline powder denoted as L.

Table 1 shows the estimated relative crystallinity of products A, B , C , D, E , F, G, H, I , J, K and L.

**Table 1**

| Example | Relative crystallinity* / % |
|---|---|
| A | 88 |
| B | 91 |
| C | 81 |
| D | 89 |
| E | 89 |
| F | 78 |
| G | 89 |
| H | 100 |
| I | 72 |
| J | 89 |
| K | 93 |
| L | 77 |

| | |
|---|---|
| * Calculated on the basis of a comparison of the sum of peak areas from XRD diffraction patterns at values °2 Theta: 7.99, 23.05, 23.27, 23.67, 23.88 and 24.35 . | |

## Claims

1. A process for the preparation of zeolite ZSM-5 granules free from inorganic binders, which comprises:
a) the preparation of dried powdered amorphous sodium aluminosilicate gel without the use of organic structure directing agent,
b) the preparation of amorphous sodium aluminosilicate granulates from the dried powdered amorphous sodium aluminosilicate gel free from inorganic binder and
c) the hydrothermal crystallization of crystalline ZSM-5 granules from amorphous sodium aluminosilicate granules, wherein the inorganic reactants are non-toxic,
wherein the amorphous sodium aluminosilicate gel is prepared by the simultaneous dosing of solution of sodium water-glass and solution of sodium aluminate, wherein the pH of the gel is adjusted using dilute sulfuric (VI) acid, zeolite ZSM-5 seed crystals with a ratio between 0.5% and 5% to the total weight of the gel are added during the mixing of the components in the reactor, the aging of the gel is performed for 1 to 24 hours at a temperature from 20°C to 80°C, the gel filtration is carried out at a temperature in the range from 15°C to 95°C, the gel drying is carried out from 0.5 to 24 hours at a temperature from 60°C to 120°C.

2. The process according to claim 1, wherein the amorphous sodium aluminosilicate gel is granulated with a solution of sodium water-glass and the wetted granulate is dried from 0.5 to 24 hours at a temperature from 60°C to 120°C.

3. The process according to previous claims, wherein the hydrothermal crystallization from amorphous sodium aluminosilicate granules is carried out in the solution of sodium hydroxide or sodium aluminate solution from 22 to 28 hours at a temperature from 170°C to 190°C, wherein crystalline ZSM-5 granules are obtained.

4. The process according to previous claims, wherein ZSM-5 seed crystals are added into a solution of sodium water-glass or sodium aluminate prior to the preparation of the amorphous sodium aluminosilicate gel.

5. The process according to the previous claims, wherein the crystallization of crystalline product from amorphous sodium aluminosilicate granulates is performed without the use of organic structure directing agent.

6. The process according to the previous claims, wherein the crystallization of crystalline ZSM-5 granules from amorphous sodium aluminosilicate granules is carried out in the alkaline solution at pH values from 9 to 11.

7. The process according to the previous claims, wherein the weight ratio of granulate:alkaline solution is 1:10.

## Patentansprüche

1. Das Verfahren zur Herstellung von Zeolith-ZSM-5-Granulat, das frei von anorganischen Bindemitteln ist, umfasst:
a) Vorbereitung von getrocknetem, pulverisiertem amorphem Natrium-Aluminosilikat-Gel ohne Anwendung eines organischen Strukturleitmittels,
b) Vorbereitung von amorphen Natrium-Aluminiumsilikat-Granulaten aus dem getrockneten amorphen Natrium-Aluminiumsilikat-Gel, das frei von anorganischem Bindemittel ist, und
c) hydrothermale Kristallisation von kristallinen ZSM-5-Granulaten aus amorphen Natrium-Aluminiumsilikat-Granulaten, wobei die anorganischen Reaktanten nicht toxisch sind,
wobei das amorphe Natrium-Aluminosilikat-Gel durch gleichzeitige Dosierung der Natrium-Wasserglaslösung und Natriumaluminat vorbereit und der pH-Wert des Gels unter Verwendung von verdünnter Schwefelsäure (VI) angepasst wird. Die Zeolith ZSM-5-Impfkristalle werden mit einem Verhältnis zwischen 0,5 % und 5 % des Gel-Gesamtgewichts während des Mischens der Komponenten in den Reaktor hinzugefügt. Die Alterung des Gels für 1 bis 24 Stunden erfolgt bei einer Temperatur von 20 °C bis 80 °C, die Geltrocknung für 0,5 bis 24 Stunden bei einer Temperatur von 60 °C bis 120 °C.

2. Das Verfahren gemäß Anspruch 1, wobei das amorphe Natrium-Aluminosilikat-Gel mit einer Natrium-Wasserglaslösung granuliert wird, und das mit Wasser benetzte Granulat 0,5 bis 24 Stunden bei einer Temperatur von 60 °C bis 120 °C getrocknet wird.

3. Das Verfahren gemäß vorherigen Ansprüchen, bei dem die hydrothermische Kristallisation aus amorphen Natrium-Aluminosilikat-Granulaten in einer Natron- oder Aluminatlauge von 22 bis 28 Stunden bei einer Temperatur von 170 °C bis 190 °C durchgeführt wird, bei dem kristalline ZSM-5-Granulate entstehen.

4. Das Verfahren gemäß vorherigen Ansprüchen, wobei die ZSM-5-Impfkristalle vor der Vorbereitung des amorphen Natrium-Aluminosilikat-Gels in eine Lösung von Natrium-Wasserglas oder Natriumaluminat gegeben werden.

5. Das Verfahren gemäß vorherigen Ansprüchen, wobei die Kristallisation von einem kristallinen Erzeugnis aus amorphen Natrium-Aluminosilikat-Granulaten ohne Verwendung eines organischen Struktur-Leitmittels durchgeführt wird.

6. Das Verfahren gemäß vorherigen Ansprüchen, wobei die Kristallisation von kristallinen ZSM-5-Granulaten aus amorphen Natrium-Aluminosilikat-Granulaten in der alkalischen Lösung bei pH-Werten von 9 bis 11 durchgeführt wird.

7. Das Verfahren gemäß vorherigen Ansprüchen, wobei das Gewichtsverhältnis von Granulat zu alkalischer Lösung 1:10 beträgt.

## Revendications

1. Un procédé pour la préparation de granules de zéolithe ZSM-5 exempts de liants inorganiques, qui comprend :
a) la préparation de gel d'aluminosilicate de sodium amorphe séché en poudre sans utiliser d'agent de direction de structure organique,
b) la préparation de granules d'aluminosilicate de sodium amorphe à partir du gel d'aluminosilicate de sodium amorphe séché en poudre exempt de liant inorganique, et
c) la cristallisation hydrothermale des granules cristallins ZSM-5 à partir de granules d'aluminosilicate de sodium amorphe, où les réactifs inorganiques sont non-toxiques,
où le gel d'aluminosilicate de sodium amorphe est préparé par le dosage simultané d'une solution de verre soluble au sodium et une solution d'aluminate de sodium, où le pH du gel est ajusté en utilisant de l'acide sulfurique dilué (VI), des germes cristallins de zéolithe ZSM-5 avec un ratio entre 0,5% et 5% du poids total du gel sont ajoutés pendant le mélange des composants dans le réacteur, la maturation du gel est réalisée pendant 1 à 24 heures à une température allant de 20°C à 80°C, la filtration du gel est réalisée à une température dans une fourchette de 15°C à 95°C, le séchage du gel est réalisé pendant 0,5 à 24 heures à une température allant de 60°C à 120°C.

2. Le procédé selon la revendication 1, dans lequel le gel d'aluminosilicate de sodium amorphe est réduit en granules avec une solution de verre soluble au sodium et les granules humidifiés sont séchés pendant 0,5 à 24 heures à une température allant de 60°C à 120°C.

3. Le procédé selon les revendications précédentes, dans lequel la cristallisation hydrothermale à partir de granules d'aluminosilicate de sodium amorphe est réalisée dans la solution d'hydroxyde de sodium ou la solution d'aluminate de sodium pendant 22 à 28 heures à une température allant de 170°C à 190°C, où des granules cristallins ZSM-5 sont obtenus.

4. Le procédé selon les revendications précédentes, dans lequel les germes cristallins ZSM-5 sont ajoutés à une solution de verre soluble au sodium ou d'aluminate de sodium antérieurement à la préparation du gel d'aluminosilicate de sodium amorphe.

5. Le procédé selon les revendications précédentes, dans lequel la cristallisation d'un produit cristallin à partir de granules d'aluminosilicate de sodium amorphe est réalisée sans utiliser d'agent de direction de structure organique.

6. Le procédé selon les revendications précédentes, dans lequel la cristallisation de granules cristallins ZSM-5 à partir de granules d'aluminosilicate de sodium amorphe est réalisée dans la solution alcaline à des valeurs de pH allant de 9 à 11.

7. Le procédé selon les revendications précédentes, dans lequel le ratio de poids des granules : solution alcaline est de 1:10.
